# EUROPEAN PATENT APPLICATION

(11) **EP 1 737 182 A2**
(43) Date of publication of application: **27.12.2006**
(21) Application number: 06011795.9
(22) Date of filing: 08.06.2006
(51) Int. Cl.: H04L 29/06, H04N 5/00

(54) **System and method for enabling playlist navigation of digital multimedia content**

(30) Priority: 24.06.2005 US 693741 P; 25.05.2006 US
(71) Applicant: Alcatel, 75008 Paris (FR)
(72) Inventor: Kosiba, David, Jamul, CA 91935 (US); Severa, Mike, Pasadena, CA 91106 (US); Wallace, Bob, Portsmouth, RI 02871 (US); Wilson, Sue, San Diego, CA 92122 (US); Foster, Michael, San Diego, CA 92130 (US)
(74) Representative: Schäfer, Wolfgang

(57) **Abstract**

A multimedia device (160) enables playlist navigation of digital multimedia content using a media player engine (250) and a media application (240). The media player engine (250) establishes a streaming media session with a content source via a standard control channel (255) over a network (150), and receives, from the content source, streaming digital multimedia content representative of a current media clip (130) within a playlist (140) during the streaming media session. The media application (240) is in communication with the content source via an external interface (245) over the network (150) and outside the standard control channel (255) between the media player engine (250) and the content source. The media application (240) generates a playlist navigation message (350) to the content source to navigate the playlist (140) and control the streaming digital multimedia content via the external interface (245).

## Description

### CROSS-REFERENCE TO RELATED APPLICATIONS

This U.S. Nonprovisional Application for Patent claims the benefit of the filing date of U.S. Provisional Patent Application entitled, PLAYLIST ENGINE INDEPENDENCE, Attorney Docket No. 134231, having Serial No. 60/693,741, filed on June 24, 2005, which is incorporated herein by reference for all purposes.

This U.S. Nonprovisional application for patent is further related by subject matter to the following PCT Patent Applications:

### SYSTEM AND METHOD FOR RETRIEVING DIGITAL MULTIMEDIA

CONTENT FROM A NETWORK NODE, Attorney Docket No. 134188 WO, having PCT Application No. PCT/US2005/007145, filed on March 3, 2005; and

### SYSTEM AND METHOD FOR RETRIEVING DIGITAL MULTIMEDIA

CONTENT FROM A NETWORK NODE, Attorney Docket No. 134213 WO, having PCT Application No. PCT/US2005/007169, filed on March 3, 2005;
the contents of which are expressly incorporated herein in their entirety by reference thereto.

### BACKGROUND OF THE INVENTION

### Technical Field of the Invention

The present invention relates in general to streaming digital multimedia content over a network, and in particular, to providing playlists enabling navigation of the digital multimedia content.

### Description of Related Art

With today's widespread use of the Internet as a major communication medium, networks are increasingly being used to transmit digital multimedia data or content (e.g., audio, full-motion video, pictures, etc.). An example of a simple network architecture enabling the transmission of multimedia content includes a client device requesting the downloading of the multimedia content from a server. Once downloaded, the client may then consume, or present, the content. Although this architecture is relatively easy to implement, the client must wait for the downloading to complete before the presentation can begin. This delay can be considerable when large blocks of multimedia data are involved.

A more sophisticated architecture of transmitting multimedia data involves a content server at one network site "streaming" the multimedia content over the network to a client at another site. Streaming is a process in which packets, sent over an Internet Protocol (IP)-based network, are used to present multimedia data continuously to a recipient client as the data arrives at the client. Thus, as perceived by the user, the multimedia content is presented in substantially real-time. Therefore, with a "streaming" architecture, the client does not have to download and store a large file before displaying the multimedia data. That is, the client may begin to present the data as it arrives (i.e., just-in-time rendering), rather than waiting for the entire data set to arrive before beginning presentation. Accordingly, at the client device, received data is buffered into a cache memory and continuously processed as soon as, or soon after, being received by the client for real time presentation of multimedia content.

Most streaming media sessions are either live sessions or video-on-demand (VOD) sessions that are typically associated with a single media clip (i.e., a single VOD file or a single live source, e.g., a video camera). However, by adding the ability to combine media clips into a single streaming session, much richer applications can be built based on multimedia streaming.

A "playlist" in its simplest form is just a list of media clips that can be used to manage playback of local multimedia content or to control streaming of server-side multimedia content during a streaming media session. For example, a playlist can include a list of the media clips, e.g., a mixture of program content and advertisements (ads), that a streaming media server can stream to a client device during a streaming media session with the client. As another example, a playlist can include several short media clips or several long blocks of programming. Thus, playlists provide an extensible, dynamic environment for delivering customizable audio and video content to users via streaming.

In a client-server streaming architecture, two types of playlists may be provided: client-side playlists and server-side playlists. Client-side playlists enable a client device to control the streaming experience, whereas server-side playlists enable a streaming media server to control the streaming experience. In addition, server-side playlists provide the streaming media server with the ability to combine streams from multiple media sources (in sequence) and stream the multimedia content from each of the media sources to a client device in a single session. The client need not (and may not even) be aware that there are multiple media sources. This may be useful for providing ad insertion capability, or for applications where uninterrupted streaming (from multiple media sources) is desired without explicit client requests for each new media source.

However, one of the drawbacks of server-side playlists is the inability of the client device, or end-user, to dynamically navigate the server-side playlist. One solution suggested by the present inventors in PCT Application Nos. PCT/US2005/007145 and PCT/US2005/007169, both of which were filed on March 3, 2005, involves modifying the Real Time Streaming Protocol (RTSP) to include a playlist protocol that allows the media player engine to receive the server-side playlist and navigate the server-side playlist.

Because the current playlist protocol takes advantage of proprietary messaging using the existing RTSP channel in a 3GPP streaming session, applications that take full advantage of playlist functionality require a media player that implements this protocol. Currently, due to the proprietary nature of the protocol, there are only a limited number of existing media players (engines) that provide this functionality. This fact precludes a sophisticated playlist application from being developed on top of an existing (non-playlist-aware) 3GPP player, such as ones that are already resident on devices when purchased from the carrier. This necessarily limits the scope of applications in which a playlist streaming media server can be used.

Thus, due to interface constraints, existing media player engines may not be able to provide the full server-side playlist navigation functionality. As a result, for server-side playlists to become widely used, the playlist navigation functionality must be made available to all client devices, regardless of the type of media engine within the client device.

Therefore, what is needed is a system and method for supporting client-side navigational control of server-side playlists with minimal impact to the client device and/or no impact to an existing media player resident on that client device.

### SUMMARY OF THE INVENTION

Embodiments of the present invention provide a multimedia device that enables playlist navigation of digital multimedia content using a media player engine and a media application. The media player engine establishes a streaming media session with a content source via a standard control channel over a network, and receives, from the content source, streaming digital multimedia content representative of a current media clip during the streaming media session. The media application is in communication with the content source via an external interface over the network and outside the standard control channel between the media player engine and the content source. The media application generates a playlist navigation message to the content source to navigate the playlist and control the streaming digital multimedia content via the external interface.

In one embodiment, the media application is further operable to generate a request to the streaming media server for the playlist that identifies the plurality of media clips including the current media clip and to receive the playlist from the streaming media server via the external interface.

In another embodiment, the multimedia device further includes a web browser that receives a uniform resource locator (URL) including a session identifier for the streaming media session. The web browser provides the URL including the session identifier to the media engine for use in establishing the streaming media session with the content source. In addition, the media application extracts the session identifier from the URL, and generates the playlist navigation message using the session identifier.

In a further embodiment, the playlist navigation generated by the media application includes the session identifier, a playlist identifier of the playlist, a media clip identifier for a selected media clip and a timing parameter indicating a time at which the streaming media server switches from the current media clip to the selected media clip. In yet a further embodiment, the playlist navigation message includes a session identifier identifying the streaming media session and a relative navigation request parameter providing navigation information relative to the current media clip.

Embodiments of the present invention further provide a multimedia system including a streaming media server providing access to media clips and playlists and a multimedia device having a media player engine and a media application. The media player engine establishes a streaming media session with the streaming media server via a standard control channel over a network, and receives, from the streaming media server, streaming digital multimedia content representative of a current one of the media clips during the streaming media session. The media application is in communication with the streaming media server via an external interface over the network and outside the standard control channel between the media player engine and the streaming media server. The media application generates a playlist navigation message to the streaming media server to navigate the playlist and control the streaming digital multimedia content via the external interface.

In an exemplary embodiment, the multimedia system further includes a conversion module operable to convert between a first protocol used by the media application to generate the playlist navigation message and a second protocol used by the streaming media server to process the playlist navigation message. In one embodiment, the conversion module is within the device. In another embodiment, the conversion module is within the network.

Embodiments of the present invention further provide a method for enabling playlist navigation of digital multimedia content. The method includes establishing a streaming media session with a content source via a standard control channel over a network and receiving from the content source streaming digital multimedia content representative of a current one of a plurality of media clips within a playlist during the streaming media session. The method further includes generating a playlist navigation message to the content source for navigating the playlist to control the streaming digital multimedia content via an external interface over the network and outside the standard control channel, and continuously receiving from the content source the streaming digital multimedia content based on the playlist navigation message

The invention further comprises a device of the above identified kind, further comprising:
a web browser operable to receive a uniform resource locator (URL) including a session identifier for the streaming media session and to provide the URL including the session identifier to the media player engine for use in establishing the streaming media session with the content source.

In that kind of device the media application is further operable to extract the session identifier from the URL and to generate the playlist navigation message using the session identifier.

In that kind of device the playlist navigation message includes the session identifier, a playlist identifier of the playlist, a media clip identifier for a selected media clip and a timing parameter indicating a time at which the content source switches from the current media clip to the selected media clip.

The invention further comprises a device of the above identified kind, wherein the playlist navigation message includes a session identifier identifying the streaming media session and a relative navigation request parameter providing navigation information relative to the current media clip.

Additionally, the invention further comprises a device of the above identified kind, wherein the standard control channel is a real time streaming protocol (RTSP) control channel.

Finally, the invention further comprises a device of the above identified kind, wherein the external interface is a hyper-text transfer protocol (HTTP) interface.

The invention further refers to a multimedia system comprising:
a streaming media server providing access to media clips and playlists; and
a device including:
   - a media player engine operable to establish a streaming media session with the streaming media server via a standard control channel over a network and to receive from the streaming media server streaming digital multimedia content representative of a current one of the media clips within a current one of the playlists during the streaming media session, and
   - a media application in communication with the streaming media server via an external interface over the network and outside the standard control channel between the media player engine and the streaming media server,
   - wherein the media application is operable to generate a playlist navigation message to the streaming media server to navigate the playlist and control the streaming digital multimedia content via the external interface.

Additionally, the invention comprises a multimedia system of the above identified kind, further comprising:
a database in communication with the streaming media server for storing the media clips and playlists.

Further, the invention comprises a multimedia system of the above identified kind, further comprising:
a conversion module operable to convert between a first protocol used by the media application to generate the playlist navigation message and a second protocol used by the streaming media server to process the playlist navigation message.

In that kind of multimedia system the conversion module includes:
a first playlist module on the device that is operable to convert between the first protocol and a playlist protocol; and
a second playlist module in communication with the first playlist module via the playlist protocol and the streaming media server via the second protocol, wherein the second playlist module is operable to convert between the playlist protocol and the second protocol.

In that kind of multimedia system the conversion module is within the device.

In that kind of multimedia system the conversion module is within the network.

Further, the invention comprises a multimedia system of the above identified kind, wherein the media application is further operable to generate a request to the streaming media server for the current playlist and to receive the current playlist from the streaming media server via the external interface.

Additionally, the invention comprises a multimedia system of the above identified kind, wherein the device is operable to receive a uniform resource locator (URL) including a session identifier for the streaming media session and to provide the URL including the session identifier to the media engine for use in establishing the streaming media session with the streaming media server.

In that kind of multimedia system the media application is further operable to extract the session identifier from the URL and to generate the playlist navigation message using the session identifier.

In that kind of multimedia system the playlist navigation message includes navigation parameters for switching from the current playlist to another one of the playlists.

Further, the invention comprises a multimedia system of the above identified kind, wherein the standard control channel is a real time streaming protocol (RTSP) control channel.

Finally, the invention comprises a multimedia system of the above identified kind, wherein the external interface is a hyper-text transfer protocol (HTTP) interface.

The invention further refers to a method for enabling playlist navigation of digital multimedia content, comprising the steps of:
establishing a streaming media session with a content source via a standard control channel over a network;
receiving from the content source streaming digital multimedia content representative of a current one of a plurality of media clips within a playlist during the streaming media session;
generating a playlist navigation message to the content source for navigating the playlist to control the streaming digital multimedia content via an external interface over the network and outside the standard control channel; and
continuously receiving from the content source the streaming digital multimedia content based on the playlist navigation message.

In that kind of method the step of generating further comprises the step of:
generating the playlist navigation message to the content source to change from the current one of the media clips to a selected one of the media clips in the playlist via the external interface.

In that kind of method the step of continuously receiving further comprises the step of:
continuously receiving the streaming digital multimedia content from the content source during the streaming media session, the streaming digital multimedia content representing the current media clip for a first portion of the streaming media session and representing the selected media clip for a second portion of the streaming media session.

That kind of method further comprises the steps of:
generating a request to the streaming media server for the playlist via the external interface; and
receiving the current playlist from the streaming media server via the external interface.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary multimedia system for providing media clips in the form of digital multimedia content and playlists identifying the media clips from a streaming media server to a multimedia client device, in accordance with embodiments of the present invention;
FIGURE 2 is a block diagram illustrating an exemplary client-server arrangement enabling playlist navigation, in accordance with embodiments of the present invention;
FIGURE 3A depicts a client device display on which both digital multimedia content and a playlist are displayed, in accordance with embodiments of the present invention;
FIGURES 3B and 3C are representative of exemplary playlist navigation messages generated by the client device, in accordance with embodiments of the present invention;
FIGURE 4A is a flowchart illustrating an exemplary process for enabling playlist navigation, in accordance with embodiments of the present invention;
FIGURE 4B is a flowchart illustrating another exemplary process for enabling playlist navigation, in accordance with embodiments of the present invention;
FIGURE 4C is a flowchart illustrating yet another exemplary process for enabling playlist navigation, in accordance with embodiments of the present invention;
FIGURE 5 is a message flow diagram illustrating exemplary messaging for navigating a playlist, in accordance with embodiments of the present invention; and
FIGURES 6-15 are block diagrams illustrating various exemplary client-server arrangements within the multimedia system, in accordance with embodiments of the present invention.

### DETAILED DESCRIPTION OF THE DRAWINGS

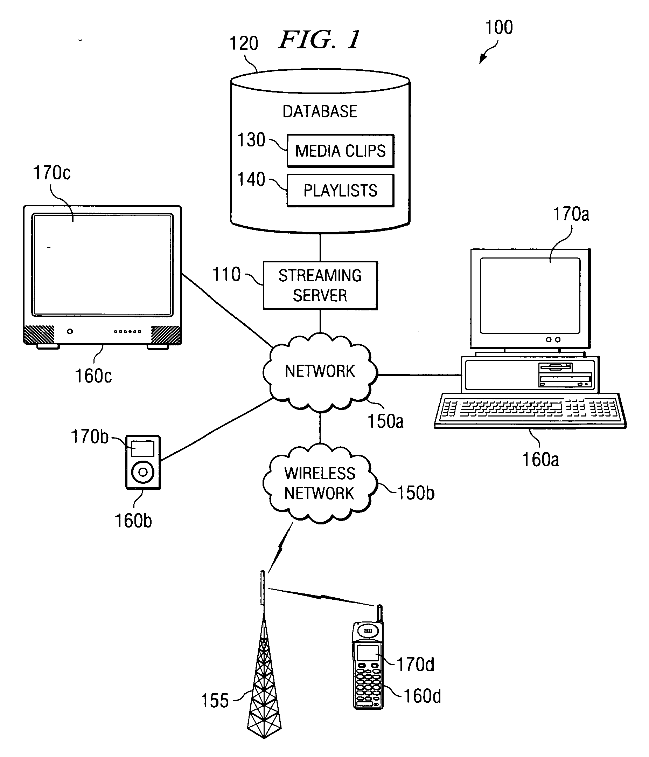

Referring to FIGURE 1, there is illustrated an exemplary multimedia system 100 capable of implementing various embodiments of the present invention. The multimedia system 100 includes a streaming media server 110, database 120, a plurality of client multimedia devices 160a-160d and networks 150a and 150b. The streaming media server 110 is coupled to network 150a to stream digital multimedia content to one or more client multimedia devices 160a-160d using a suitable text-based protocol, such as the Real-Time Streaming Protocol (RTSP). Although the streaming media server 110 is illustrated as a single node coupled to network 150a, its functionality may be distributed among a plurality of nodes depending on the underlying streaming media architecture.

The database 120 serves as a depository of the digital multimedia content. The streaming media server 110 interfaces with the database 120 to retrieve the digital multimedia content to be streamed to the client devices 160a-160d via network 150a and/or 150b. Within the database 120, the digital multimedia content is stored as media clips 130. Each media clip 130 contains a digital media file, such as a sound file, picture data file, movie file, text file or any other type of media that can be digitally stored on a computer.

The media clips 130 are further organized within the database 120 based on parameters that are used to classify, identify and/or describe the media clips 130. For example, as shown in FIGURE 1, the media clips 130 are organized into server-side playlists 140 that can be generalized to media collections, including collections of mixed digital media. For example, playlists 140 may be used to combine media by genre, mood, artist, director/producer, audience, or any other meaningful arrangement. Each playlist 140 identifies one or more individual media clips 130 stored on the database 120. While the playlists 140 maintained on the database 120 will typically only identify media clips 130 and other playlists 140 contained within the database 120, in other embodiments, the playlists 140 may identify media clips or playlists stored on other databases and/or other streaming media servers, depending upon the implementation of the multimedia system 100. As used herein, the term "playlist" refers to a set of one or more streams, each representing a particular media clip 130, that are streamed in succession to a client device 160a-160d as a complete media feed.

Networks 150a and 150b are illustrative of a network infrastructure that can include, among others, any wireline, wireless, satellite, or cable network arrangement, or a combination thereof, that can support transfer of digital multimedia content from the streaming media server 110 to the various client devices 160a-160d capable of accepting such content over a client-server network architecture. In one implementation, network 150a may comprise a public packet-switched network such as the Internet that is accessible via suitable access means including both narrowband (e.g., dial-up) and broadband (e.g., cable, digital subscriber line or DSL, etc.) access mechanisms. Alternatively, network 150a may be implemented as a private enterprise-level intranet. Wireless network 150b may be implemented as a wireless packet data service network, such as the General Packet Radio Service (GPRS) network, that provides a packet radio access for mobile devices using the cellular infrastructure of a Global System for Mobile Communications (GSM)-based carrier network. In still further implementations, the wireless network 150b may comprise any known or heretofore unknown 3^{rd} Generation Partnership Project (i.e., 3GPP, 3GPP2, etc.) network operable to serve Internet Protocol (IP)-capable handheld devices, e.g., a mobile client device 160d, using appropriate wireless infrastructure 155 that includes, among others, short-range wireless fidelity (WiFi) access points (APs), base stations or "hot spots." It should be understood that embodiments of the present invention apply to any particular wireless or wireline network implementation of the networks 150a and 150b.

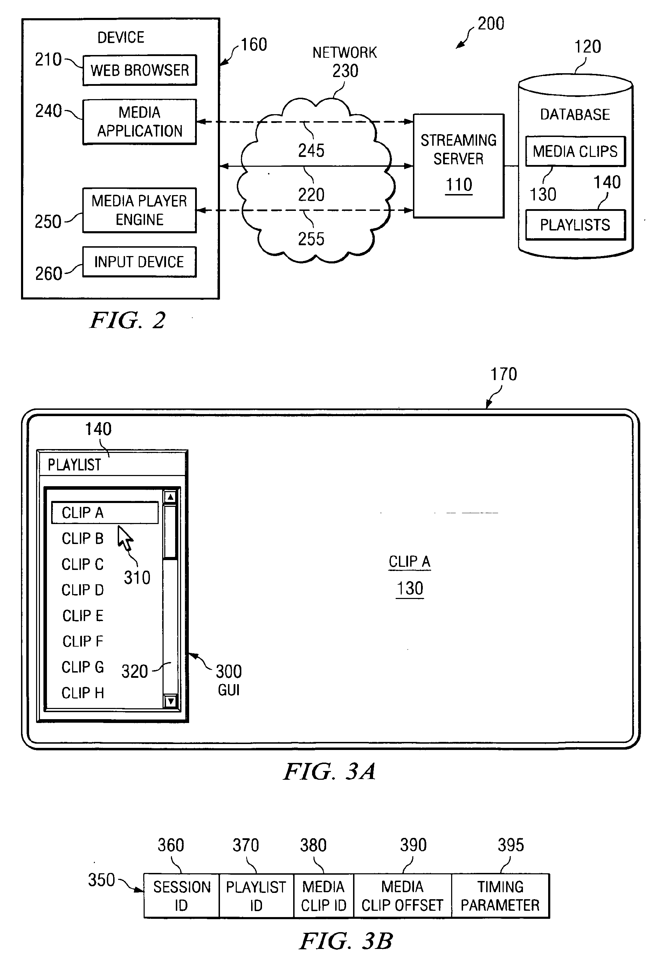

Turning now to FIGURE 2, there is illustrated an exemplary client-server arrangement 200 enabling a client device 160 to select a particular media clip 130 from a playlist 140, in accordance with embodiments of the present invention. In FIGURE 2, the client device 160 is shown including a web browser 210, a media application 240, a media player engine 250 and an input device 260. The web browser 210 executing on the client device 160 is operable to interact with a web server (not shown) with respect to user requests and user feedback for locating streaming media content, e.g., by identifying a uniform resource locator (URL) for the streaming media server 110.

The URL may further identify a particular playlist 140 and/or media clip 130 accessible by the streaming media server 110. For example, each playlist 140 and/or media clip 130 may be identified by an RTSP URL. As an example, the RTSP URL:
*rtsp:*//*media.example.com:554*/*twister*/*audiotrack*
identifies the audio stream media clip within the playlist *"twister",* which can be controlled via RTSP requests to the streaming media server 110 <*media.example.com*>.

The media player engine 250, which may be embodied in software, hardware, firmware, or any combination thereof, communicates with the streaming media server 110 to establish a streaming media session, to receive streaming digital multimedia content therefrom and to control play back of the streaming digital multimedia content during the streaming media session. For example, the media player engine 250 may send RTSP requests to the streaming media server 110 to play, pause or stop a streaming media session.

The media application 240 is a streaming media application executing on the client device 160 that is operable to provide playlist navigation control during a streaming media session. By way of example, but not limitation, the media application 240 may provide instructions to the streaming media server 110 to move within the playlist 140 relative to the current media clip being played by the streaming media server within the playlist (e.g., next media clip, previous media clip), move within the current media clip relative to the current position of the streaming media server in the media clip (e.g., fast-forward or rewind), skip one or more media clips 130 within the playlist 140 (e.g., skip to media clip X), immediately transition from a current media clip 130 to another media clip 130 within the playlist 140 (e.g., switch to media clip X), begin playing another media clip 130 within the playlist 140 at a particular time (e.g., switch to media clip X at time T) and/or switch to another playlist 140 (e.g., switch to playlist B).

The media application 240 and media player engine 250 each communicate with the streaming media server 110 via respective physical and logical channels over a network 230, which can include any type or combination of networks, such as the networks 150a and 150b shown in FIGURE 1. More particularly, the media player engine 250 communicates with the streaming media server 110 via physical channel 220 and a standard logical control channel 255, while the media application 240 communicates with the streaming media server 110 via logical channel 245. Logical channel 245 represents an external interface 245 to the streaming media server 110 that is outside of the standard logical control channel 255 between the media player engine 250 and the streaming media server 110.

The physical channel 220 uses a transport protocol, e.g., Real-Time Protocol (RTP), to stream digital multimedia content from the streaming media server 110 to the media player engine 250 within the client device 160 for real-time play back thereof. The external interface 245 uses one or more communication protocols (e.g., HTTP or other protocol), at least one of which is understood by the streaming media server 110, to access the playlist 140 associated with the streaming media session and to control playlist navigation. For example, the media application 240 may generate a message in a first protocol for conversion thereof through the external interface 245 into a second protocol used by the streaming media server 110. A conversion module (not shown) may be included within the client device 160, within the streaming media server 120 or within the network (e.g., on a network node in communication with the device 160 and server 110) to perform the protocol conversion.

The standard control channel 255 between the media player engine 250 and the streaming media server 110 uses an application-level text-based protocol, such as RTSP, Session Initiation Protocol (SIP), H.323, etc., to initiate and control the streaming media session. RTSP is operable to control multiple streaming media sessions, provide a means for choosing delivery channels, such as User Datagram Protocol (UDP) channels, multicast UDP channels, etc., as well as provide a means for choosing data delivery mechanisms based upon the Real-Time Protocol (RTP). In general, RTSP establishes and controls play back of one or more time-synchronized streams of continuous media, such as audio and video. For example, RTSP may be used to play, pause or stop a streaming media session.

As mentioned above, the streams controlled by RTSP may use RTP for data delivery over the physical channel 220, but the operation of RTSP does not depend on the transport mechanism used to carry continuous media. Thus, an RTSP session is not tied to a specific transport-level connection, such as the Transmission Control Protocol (TCP). During an RTSP session, an RTSP client application may open and close a number of TCP transport connections to the server 110 to issue RTSP requests. Alternatively, RTSP may use a connectionless transport protocol, such as UDP. Additional details regarding RTSP may be found in IETF Request for Comments (RFC) 2326, "Real Time Streaming Protocol (RTSP)" by Schulzrinne et al. (dated April 1998), which is incorporated by reference herein.

In an exemplary operation, upon receiving a URL for accessing and retrieving streaming digital multimedia content, the media player engine 250 establishes a streaming media session with the streaming media server 110 associated with the streaming digital multimedia content using the URL over the RTSP control channel 255. For example, the media player engine 250 can include the URL in an RTSP request to the streaming media server 110 to receive digital multimedia content representing one or more media clips 130 associated with a particular playlist 140. In response, the streaming media server 110 assigns an RTSP session identifier to the streaming media session and passes the RTSP session identifier back to the media player engine 250 for use in controlling the streaming media session.

Once the streaming media session is established between the streaming media server 110 and the media player engine 250 over the RTSP control channel 255, the streaming media server 110 accesses the database 120 to retrieve the media clips 130 within the particular playlist 140 requested by the media player engine 250, and streams the retrieved media clips 130 associated with the particular playlist 140 to the client device 160 over the physical RTP channel 220.

At any time during the streaming media session, the media application 240 can communicate with the streaming server 110 over the external interface 245 to retrieve the playlist 140 and/or navigate the playlist 140 to control the digital multimedia content streamed to the media player engine 250. In one embodiment, the media application 240 is communicatively coupled to the web browser 210 to receive the URL and uses information in the URL to retrieve the correct playlist 140 from the streaming media server 110. For example, the URL can include a unique playlist session identifier that is used by the streaming media server 110 to correlate requests from the media application 240 to the particular streaming media session with the media player engine 160. The media application 240 includes the session identifier in each message sent to the streaming media server 110 to enable the streaming media server 110 to identify the ongoing streaming media session to which the message is directed. In another embodiment, the media application 240 is provided with the RTSP session identifier, and uses the RTSP session identifier to route messages to the streaming media server 110 over the external interface 245.

In addition, the media application 240 is operably coupled to the input device 260, e.g., mouse, keyboard, light pen, stylus, "soft" keyboard or other input device, to receive user signals representing user input for navigating the playlist 140, thereby controlling the digital multimedia content streamed from the server 110 to the media player engine 250. For example, the input device 260 may provide user signals to the media application 240 that instruct the media application 240 to generate a playlist navigation message including navigation parameters for navigating the playlist. By way of example, but not limitation, the navigation parameters may include moving within the playlist 140 to the next media clip 130 or previous media clip130, moving within the current media clip, such as fast-forwarding or rewinding, skipping one or more media clips 130 in the playlist 140, transitioning to the next media clip 130 in the playlist 140 and/or switching to another playlist. In response to the user signals, the media application 250 generates and transmits the playlist navigation message to the streaming media server 110 via the external interface 245, and includes either the unique playlist session identifier or the assigned RTSP session identifier in the playlist navigation message. The streaming media server 110 correlates the unique playlist session identifier or the RTSP session identifier with the ongoing streaming media session with media player engine 250, and processes the message for the ongoing streaming media session.

For example, if the playlist navigation message includes a request for an immediate transition to the next media clip 130 in the playlist 140, upon receipt of the message, the streaming media server 110 seamlessly stops streaming the current media clip and begins streaming the next media clip. Since the client device 160 continuously receives digital multimedia content from the streaming media server 110, a user would not perceive any discontinuity in time of the real-time streaming digital multimedia content. Thus, the streaming digital multimedia content would represent the current media clip for a first portion of the streaming media session and represent the next media clip for a second portion of the streaming media session.

FIGURE 3A depicts an exemplary client device display 170 on which both digital multimedia content (media clips 130) and a playlist 140 are displayed, in accordance with embodiments of the present invention. The playlist 140 is displayed within a graphical user interface (GUI) 300 on the display that enables a user to select media clips 130 from the playlist 140. For example, the user can control the position of a cursor 310 and/or scroll bar 320 on the GUI 300 using the input device 260 shown in FIGURE 2, to select one or more media clips 130 from the playlist 140. For example, as shown in FIGURE 3A, the current playlist 140 includes Clips A, B, C, D, E, F, G and H. On the display, Clip A is currently being played. However, if the user desires to skip to Clip C, the user can move the cursor 310 and/or scroll bar 320 to highlight and select Clip C.

FIGURE 3B is representative of an exemplary playlist navigation message 350 generated by the client device, in accordance with embodiments of the present invention. The message 350 includes the session identifier 360 (e.g., either the unique playlist session identifier received in the URL or the RTSP session identifier assigned by the streaming media server), a playlist identifier 370 identifying the selected playlist, a media clip identifier 380 identifying a media clip, a media clip offset 390 and a timing parameter 395. The media clip offset 390 may be used to specify at which point within the identified clip streaming should begin. The timing parameter 395 (referred to as effective time or activation time) may be provided to determine when a client-initiated playlist navigation request is to be satisfied (e.g., now, end of current clip, end of playlist, or a time value based on a clock). Thus, the timing parameter 395 indicates a time at which the streaming media server switches between media clips.

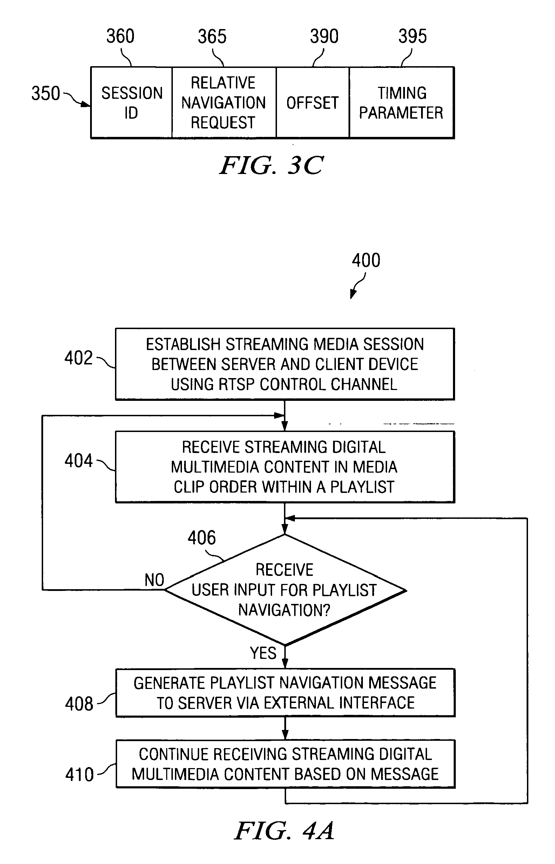

FIGURE 3C is representative of another exemplary playlist navigation message 350 generated by the client device, in accordance with embodiments of the present invention. The message 350 in FIGURE 3C is a relative playlist navigation message that does not require the media application to have any knowledge of the playlist file. Therefore, in embodiments in which the media application does not have access to the playlist file, the media application can still provide client-side navigation control of the server-side playlist.

In FIGURE 3C, the message 350 includes the session identifier 360 (e.g., either the unique playlist session identifier received in the URL or the RTSP session identifier assigned by the streaming media server), a relative navigation request parameter 365, a media clip offset 390 and a timing parameter 395. The relative navigation request parameter 365 provides instructions for the streaming media server to change the multimedia digital content streamed to the client device relative to the current position of the streaming media server within the playlist and/or within the media clip. By way of example, but not limitation, the relative navigation request parameter 365 may include a request to move within the playlist 140 relative to the current media clip being played by the streaming media server within the playlist (e.g., next media clip, previous media clip) or to move within the current media clip relative to the current position of the streaming media server in the media clip (e.g., fast-forward or rewind). The media clip offset 390 may be used to specify at which point within the next/previous clip streaming should begin or at which point within the current clip streaming should begin. The timing parameter 395 (referred to as effective time or activation time) may be provided to determine when a client-initiated playlist navigation request is to be satisfied (e.g., now, end of current clip, end of playlist, or a time value based on a clock).

FIGURE 4A illustrates an exemplary process 400 for enabling playlist navigation, in accordance with embodiments of the present invention. Initially, at block 402, an RTSP SETUP message is generated by the client device over an RTSP control channel to the streaming media server to establish a streaming media session therebetween. At block 404, the client device receives streaming digital multimedia content representing a media clip within a playlist associated with the streaming media session. At the end of a current clip, the streaming media server uninterruptedly transitions to streaming from the next media clip in the playlist.

While streaming from the current media clip is continuing, at block 406, a determination is made whether user input for playlist navigation is received. For example, the user input may request movement within the playlist to the next media clip or previous media clip, movement within the current media clip, such as fast-forwarding or rewinding, skipping one or more media clips in the playlist, transitioning to another media clip in the playlist immediately or at a particular time and/or switching to another playlist. If so (Y branch of 406), at block 408, the client device generates a playlist navigation message including navigation parameters that instruct the streaming media server to navigate the playlist and change the digital multimedia content streamed to the client device according to the user input, and transmits the playlist navigation message to the streaming media server via the external interface. For example, the client device can generate a playlist navigation message which includes new media clip parameters, as described above in connection with FIGURE 3B, or relative navigation request parameters, as described above in connection with FIGURE 3C.

Responsive thereto, at block 410, the streaming media server navigates the playlist according to the navigation parameters included in the playlist navigation message, and continues to stream digital multimedia content after navigation such that the client device continuously receives streaming digital multimedia content. Thus, the playlist navigation message allows the user to control the digital multimedia content streamed to the client device. Depending on specific message parameters, navigation can begin immediately upon receiving the playlist navigation message or at a particular point in time.

If user input for playlist navigation is not received (N branch of 406), the client device continues to receive the digital multimedia content in the media clip order designated in the playlist. Thus, upon reaching the end of the current media clip, the streaming media server continues to stream from the next media clip in the playlist. This process continues until the playlist is ended.

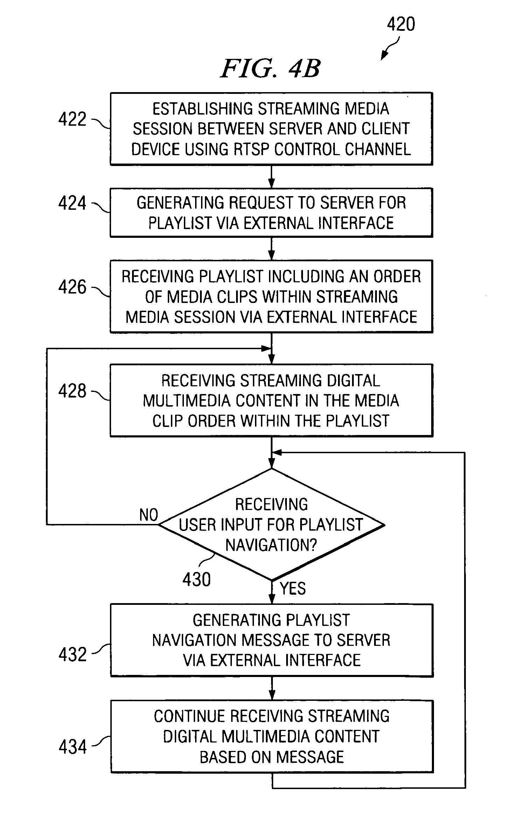

FIGURE 4B illustrates another exemplary process 420 for enabling playlist navigation, in accordance with embodiments of the present invention. Initially, at block 422, an RTSP SETUP message is generated by the client device over an RTSP control channel to the streaming media server to establish a streaming media session therebetween. In addition, at block 424, the client device further generates a request via an external interface to the streaming media server for a playlist associated with the streaming media session. For example, the playlist can include media clip identifiers and other media clip metadata, such as the set of encodings, network addresses and other information about the content, for all of the media clips within the playlist currently being streamed to the client device. In an exemplary embodiment, the playlist also includes an order by which the media clips will be successively streamed to the client device.

In response to the playlist request, at block 426, the client device receives the requested playlist from the streaming media server via the external interface. In addition, at block 428, the client device further receives streaming digital multimedia content representing one of the media clips in the playlist. At the end of a current clip, the streaming media server uninterruptedly transitions to streaming from the next media clip in the playlist.

While streaming from the current media clip is continuing, at block 430, a determination is made whether user input for playlist navigation is received. For example, the user input may request movement within the playlist to the next media clip or previous media clip, movement within the current media clip, such as fast-forwarding or rewinding, skipping one or more media clips in the playlist, transitioning to another media clip in the playlist immediately or at a particular time and/or switching to another playlist. If so (Y branch of 430), at block 432, the client device generates a playlist navigation message including navigation parameters that instruct the streaming media server to navigate the playlist according to the user input and transmits the playlist navigation message to the streaming media server via the external interface.

For example, if the user input selects another media clip in the playlist, the client device can generate a SWITCH message to change from the current media clip to the selected media clip and transmits the message to the streaming media server via the external interface. Responsive thereto, at block 434, the streaming media server navigates the playlist according to the navigation parameters included in the playlist navigation message, and continues to seamlessly stream digital multimedia content after navigation. Using the above example, the streaming media server would seamlessly switch to the selected media clip in the playlist, such that the client device continuously receives streaming digital multimedia content. Depending on specific message parameters, streaming from the current clip can continue until the end or may be terminated substantially immediately upon receiving the SWITCH message from the client device.

If user input selecting a new media clip is not received (N branch of 430), the client device continues to receive the digital multimedia content in the media clip order designated in the playlist. Thus, upon reaching the end of the current media clip, the streaming media server continues to stream from the next media clip in the playlist. This process continues until the playlist is ended.

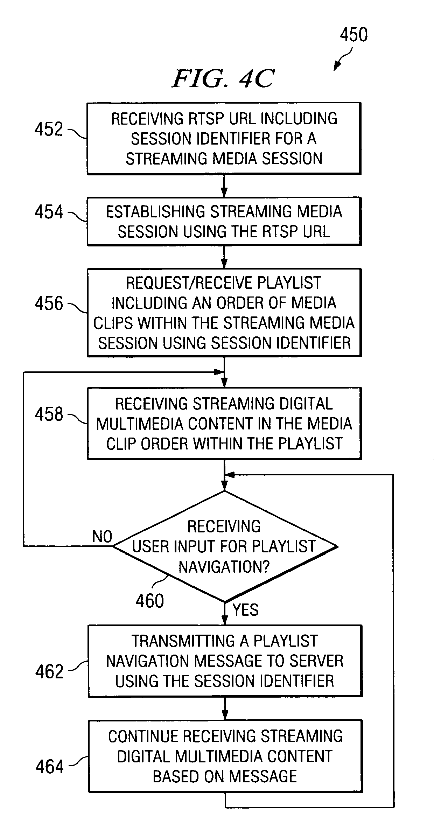

FIGURE 4C illustrates yet another exemplary process 450 for enabling playlist navigation, in accordance with embodiments of the present invention. Initially, at block 452, a client multimedia device receives an RTSP URL that includes a playlist session identifier for a streaming media session. At block 454, the client device uses the RTSP URL establish the streaming media session. For example, the client device can include the entire RTSP URL within an RTSP SETUP message sent over an RTSP control channel to a streaming media server to establish a streaming media session therebetween.

In addition, at block 456, the client device further generates a request to the streaming media server for a playlist associated with the streaming media session using the playlist session identifier included in the RTSP URL. For example, the client device can populate a message with the playlist session identifier and transmit the message via an external interface to the streaming media server. The playlist includes media clip identities of all media clips within the playlist and an order by which the media clips will be successively streamed to the client device. In response to the playlist request, the client device receives the requested playlist from the streaming media server via the external interface. In addition, at block 458, the client device further receives streaming digital multimedia content representing one of the media clips in the playlist.

While streaming from the current media clip is continuing, at block 460, a determination is made whether user input for playlist navigation is received. For example, the user input may request movement within the playlist to the next media clip or previous media clip, movement within the current media clip, such as fast-forwarding or rewinding, skipping one or more media clips in the playlist, transitioning to another media clip in the playlist immediately or at a particular time and/or switching to another playlist. If so (Y branch of 460), at block 462, the client device generates a playlist navigation message including navigation parameters that instruct the streaming media server to navigate the playlist according to the user input and transmits the playlist navigation message, including the playlist session identifier, to the streaming media server via the external interface. Responsive thereto, at block 464, the streaming media server navigates the playlist according to the navigation parameters included in the playlist navigation message, and continues to seamlessly stream digital multimedia content after navigation.

However, if user input selecting a new media clip is not received (N branch of 460), the client device continues to receive the digital multimedia content in the media clip order designated in the playlist. Thus, upon reaching the end of the current media clip, the streaming media server continues to stream from the next media clip in the playlist. This process continues until the playlist is ended.

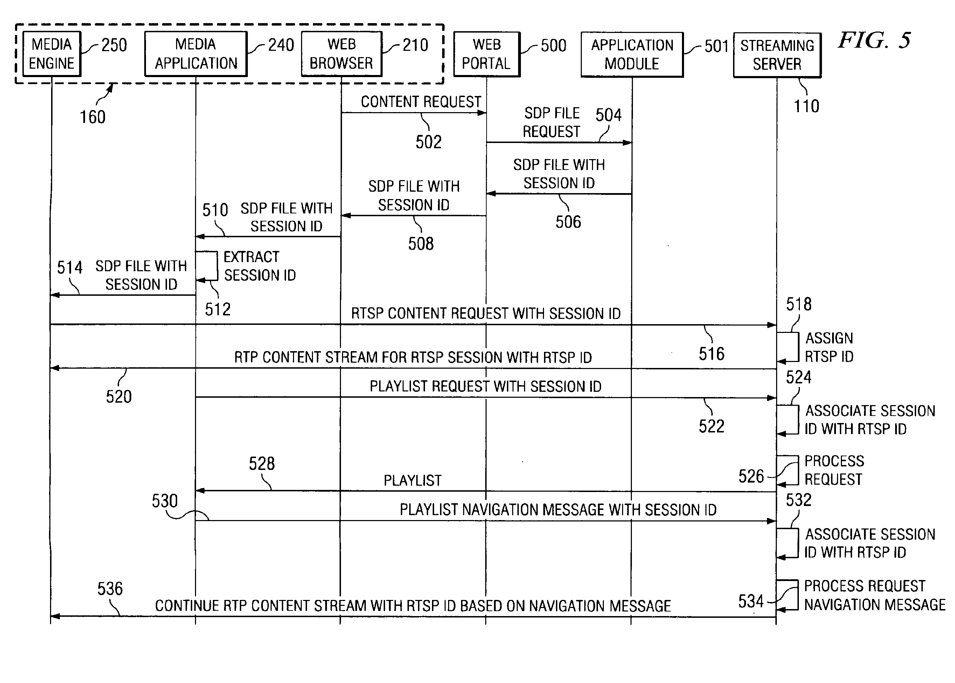

FIGURE 5 is a message flow diagram illustrating exemplary messaging for navigating a playlist, in accordance with embodiments of the present invention. In FIGURE 5, a web browser 210, client media application 240 and client media player engine 250 are included in a digital multimedia device 160, which is disposed in a client-server arrangement with a streaming media server network node 110. The web browser 210 is in communication with a web portal 500 for accessing playlist and media content identifiers (e.g., URLs) maintained by a server application module (AM) 501. The server application module 501 is in communication with the streaming media server 110 to receive updated playlist and media content identifiers.

To access a particular playlist, the web browser 210 generates a content request at step 502 to the web portal 500 for the particular playlist. In response to the content request, the web portal 500 generates an SDP file request at step 504 to a CreateMetafile service on the AM 501 for an SDP file associated with the particular playlist. Thereafter, the AM 502 generates an SDP file for the particular playlist and passes the SDP file at step 506 back to the web portal 500, which in turn, passes the SDP file at step 508 back to the web browser 210. Those skilled in the art should appreciate that the SDP file contains data that would have been obtained via an RTSP DESCRIBE request, as well as additional information. Thus, the SDP file includes the URL associated with the particular playlist. In addition, in accordance with embodiments of the present invention, the SDP file also includes a unique playlist session identifier that is generated by the Createmetafile service on the AM 501 for the client device 160. In an exemplary embodiment, the unique playlist session identifier is included as part of the URL provided in the SDP file.

Upon receipt of the SDP file including the unique playlist session identifier, at step 510, the web browser 210 passes the SDP file with the unique playlist session identifier to the media application 240. At step 512, the media application 240 extracts the unique playlist session identifier from the SDP file, and at step 514, the media application 240 passes the SDP file with the unique playlist session identifier to the media player engine 250. The media player engine 250 uses the SDP file to generate an RTSP content request message (e.g., an RTSP SETUP message) to the streaming media server 110 at step 516. In an exemplary embodiment, the media player engine 250 populates the URL including the unique playlist session identifier within the RTSP content request message to access the particular playlist associated with the streaming media server 110. The streaming media server 110 extracts the unique playlist session identifier from the RTSP content request and correlates the unique playlist session identifier with an RTSP session identifier that is assigned by the streaming media server 110 at step 518.

Thereafter, once an RTSP PLAY message is transmitted to the streaming media server 110 by the media player engine 250, the streaming media server 110 initiates a streaming media session therebetween. During the streaming media session, at step 520, the streaming media server 110 provides an RTP content stream to the media player engine 250 for the RTSP session associated with the assigned RTSP session identifier. For example, the streaming media server 110 may sequentially stream digital multimedia content representing each of the media clips in the particular playlist identified in the URL. At the end of one media clip, the streaming module uninterruptedly transitions to streaming from the next media clip in the playlist. Thus, during normal playback, the streaming media server 110 is operable to seamlessly open each successive media clip file in the playlist and continue streaming without interruption, which is seen by the media player engine 250 as a continuous RTP session.

To enable playlist selection at the client device 160, at step 522, the media application 240 generates a playlist request with the unique playlist session identifier extracted from the SDP file at step 512, and transmits the playlist request to the streaming media server 110. In response to the playlist request, at step 524, the streaming media server 110 associates the unique playlist session identifier included in the playlist request with the RTSP session identifier assigned to the streaming media session with the media player engine 240, and at step 526, the streaming media server 110 processes the playlist request to retrieve the playlist associated with the RTSP session identifier for the streaming media session with the media player engine 250. Therafter, at step 528, the streaming media server 110 passes the requested playlist to the media application 240. The playlist includes, for example, media clip identities of all media clips within the playlist and an order by which the media clips will be successively streamed to the media player engine 250.

It should be understood that in other embodiments, one or more of steps 524-528 may be optional in that the media application 240 either may not request the playlist or the media application 240 may not have access to the playlist. However, the media application 240 can still provide playlist navigation control, as described above in connection with FIGURES 3C and 4A, and as described below in connection with steps 530-536.

During the streaming media session, the media application 240 may generate a playlist navigation message using the unique playlist session identifier to navigate the playlist (e.g., change from the current media clip to a selected media clip within the playlist), and at step 530, transmit the playlist navigation message, including the playlist session identifier, to the streaming media server 110. Responsive thereto, at step 532, the streaming media server 110 associates the unique playlist session identifier included in the playlist request with the RTSP session identifier assigned to the streaming media session with the media player engine 240, and at step 534, the streaming media server 110 processes the playlist navigation message to navigate the playlist in accordance with the navigation parameters included in the playlist navigation message. Therafter, at step 536, the streaming media server 110 continues the RTP content stream with the RTSP ID based on the navigation message, such that the media player engine 250 continuously receives streaming digital multimedia content from the streaming media server 110.

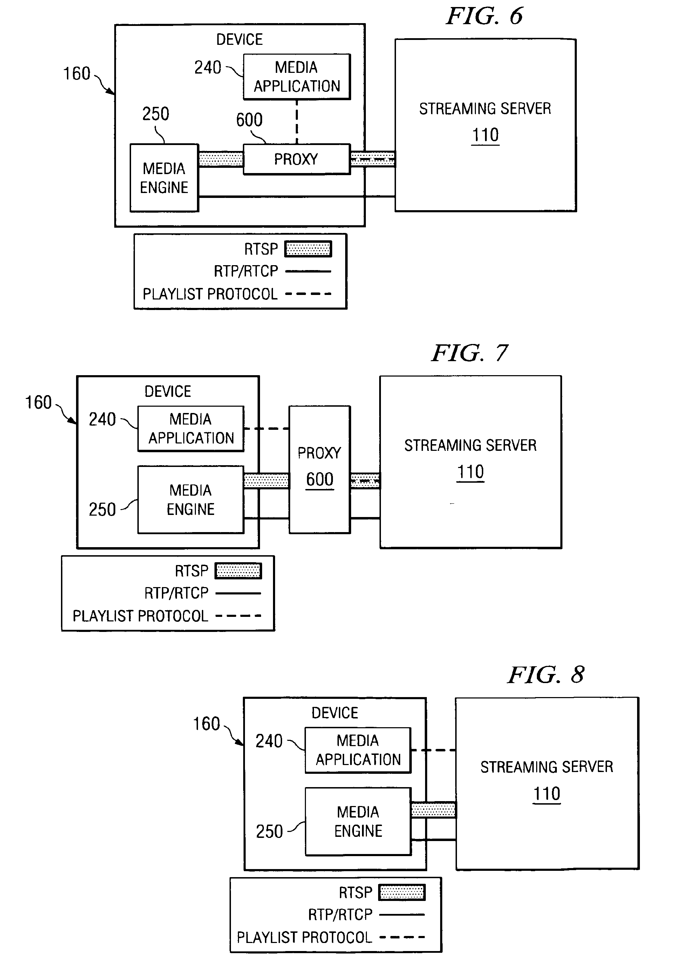

FIGURES 6-15 are block diagrams illustrating various exemplary client-server arrangements within the multimedia system, in accordance with embodiments of the present invention. In FIGURES 6-15, RTSP communication is represented by a thick dotted line, RTP/RTCP communication is represented by a solid line and playlist protocol communication is represented by a broken line. When the broken line is shown by itself, the playlist protocol may be implemented using any external protocol, such as the hyper-text transfer protocol (HTTP). However, when the broken line is shown encapsulated by the thick dotted line, the playlist protocol is a part of the RTSP communication (i.e., the RTSP has been modified to include playlist commands).

In FIGURE 6, an RTSP proxy 600 is implemented on the client device 160 to provide playlist selection ability without having to provide a playlist-enabled media player engine 250. The streaming media server 110 has no knowledge of the proxy 600, and therefore, communicates with the client device 160 as if the media player engine 250 is playlist-enabled. Thus, the proxy 600 communicates with the streaming media server 110 using RTSP and the playlist protocol. The proxy 600 passes RTSP communications from the streaming media server 110 to the media player engine 250 and passes playlist protocol communications from the streaming media server to the media application 240. Thus, the proxy 600 converts between the combined RTSP/playlist protocol used by the streaming media server 110 and the playlist protocol used by the media application 240. As such, the external interface between the media application 240 and the streaming media server 110 is realized by the proxy 600.

However, the arrangement shown in FIGURE 6 does require a client-side module, i.e., the RTSP/Playlist proxy 600. This arrangement is dependent on the ability of the proxy 600 to effectively co-opt the TCP socket on the client device 160 with no knowledge or assistance from the 3GPP streaming media player engine 250, which may be possible on client devices 160 where there is an option of providing networking modules to the 3GPP engine 250 for use in streaming. If such an option is not provided, this arrangement may not be possible.

FIGURE 7 illustrates another exemplary client-server arrangement in which the RTSP/playlist proxy 600 resides outside of the client device 160. In this arrangement, the RTSP and playlist protocol communication flow is effectively identical to that shown in FIGURE 6, but the proxy 600 is located somewhere in the network or within the streaming media server 110. In addition, in FIGURE 7, the proxy 600 is also capable of performing RTP/RTCP data proxying between the media engine 250 and the streaming server 110.

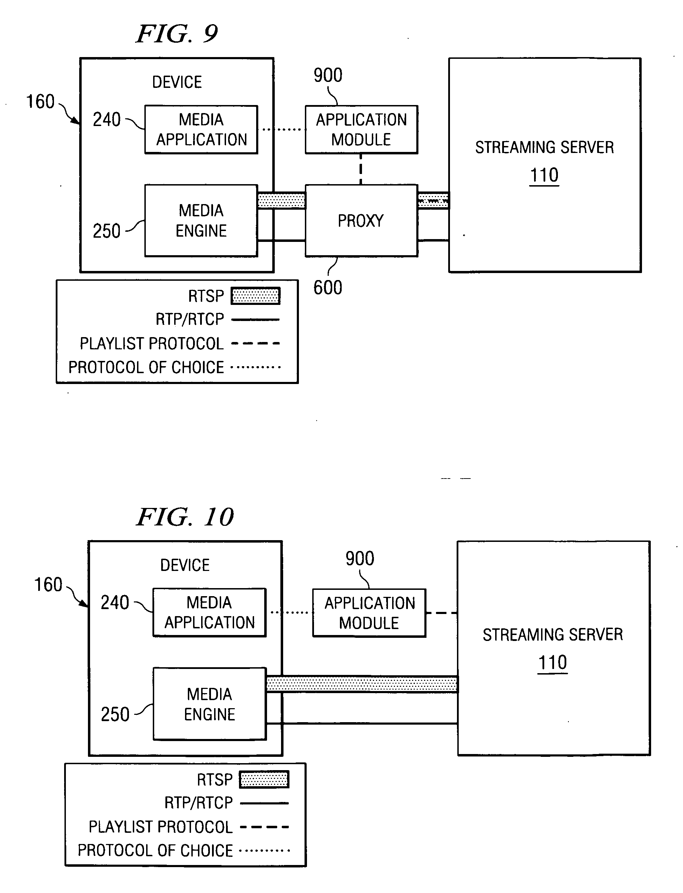

Another alternative client-server arrangement is shown in FIGURE 8. In FIGURE 8, instead of encapsulating the playlist protocol communications within the RTSP communications from the streaming media server 110 (as in FIGURES 6 and 7), the playlist protocol communications are flowing through an external API on the streaming media server 110. In effect, this arrangement is conceptually the same interface exposed by the RTSP/RTP Playlist proxy shown in FIGURES 6 and 7, i.e., in that the proxy 600 appears to the media application 240 as a streaming media server with an external API. However, to implement the arrangement in FIGURE 8, the streaming media server 110 needs to be modified to support the external API.

Although direct communication between the client media application 240 and streaming media server 110 is shown for simplicity's sake in FIGURE 8, in practice, the client media application 250 may need to interface with another server-side module to control content management and access. FIGURES 9 and 10 illustrate client-server arrangements with an additional server-side application module 900. Although the client-server arrangements shown in FIGURES 9 and 10 are conceptually the same as the arrangement shown in FIGURE 8, in FIGURES 9 and 10 the client media application 240 can utilize any protocol of choice to communicate with the application module 900. However, the application module 900 will still need to communicate with the streaming media server 110 using the "proxy" external API.

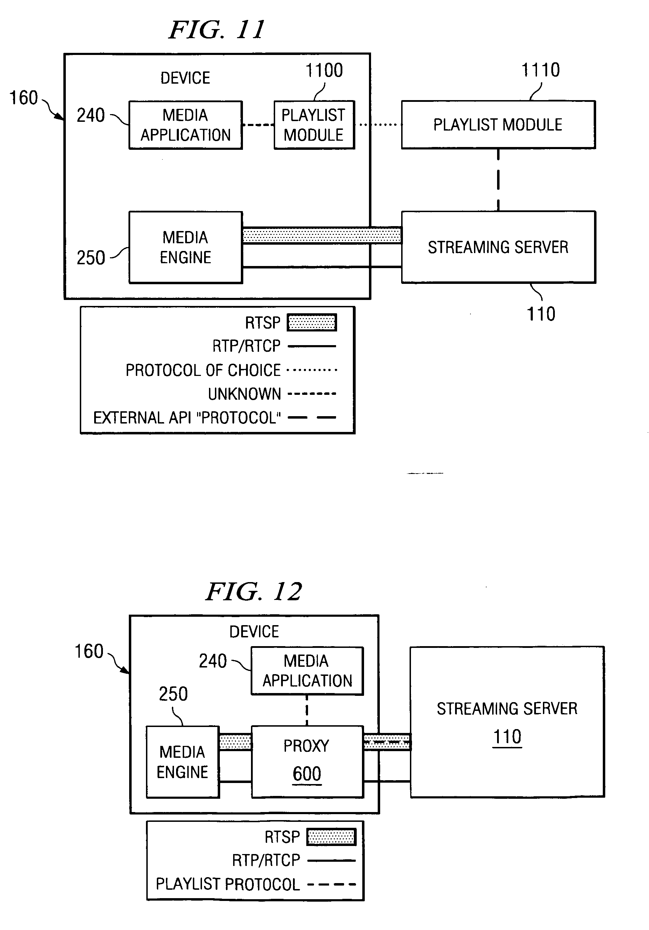

FIGURE 11 illustrates yet another exemplary client-server arrangement in which the playlist selection functionality is divided between a client-side playlist module 1100 and a server-side playlist module 1110. The playlist modules 1100 and 1110 communicate using a playlist protocol of choice. The client-side playlist module 1100 is operable to convert between a protocol used by the media application 240 and the playlist protocol, while the server-side playlist module 1110 is operable to convert between the playlist protocol and the "proxy" external API used by the streaming media server 110. This arrangement allows for protocol updates between the client-side playlist module 1100 and the server-side playlist module 1110 without affecting the media application 240, media player engine 250 or streaming media server 110.

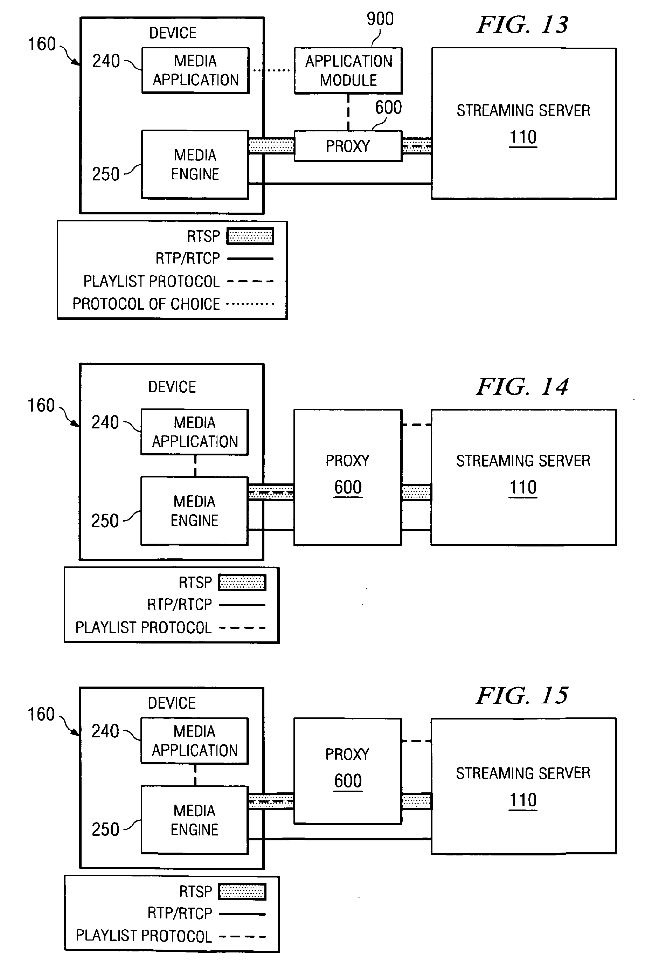

FIGURE 12 illustrates a variation of the client-server arrangement shown in FIGURE 6. In FIGURE 12, the proxy 600 included within the client device 160 is also capable of performing RTP/RTCP data proxying between the media engine 250 and the streaming server 110. FIGURE 13 illustrates a variation of the client-server arrangement shown in FIGURE 9. In FIGURE 13, the proxy 600 does not perform RTP/RTCP data proxying between the media engine 250 and the streaming server 110.

FIGURES 14 and 15 illustrate exemplary client-server arrangements in which the media player engine 250 is playlist-enabled, i.e., the media player engine understands the combined RTSP/playlist protocol, but the streaming media server 110 only understands the external API playlist protocol. Therefore, instead of including the playlist protocol within the RTSP communication directly between the media player engine 250 and the streaming media server 110, a proxy 600 is provided to communicate playlist protocol messages with the streaming media server 110 via the external API. In FIGURE 14, the proxy 600 is further capable of performing RTP/RTCP data proxying between the media engine 240 and the streaming server 110, whereas in FIGURE 15, the proxy 600 does not perform RTP/RTCP data proxying.

Based on the foregoing description, it should be appreciated that the present invention provides the ability for a streaming client media application to request a streaming media server to dynamically navigate within or across a playlist boundary, either in the form of skipping to a media clip within the same playlist or from another playlist file, or to an offset within a particular media clip. Further, such navigation is possible in an exemplary client-server network arrangement regardless of the underlying streaming architecture (e.g., RealMedia, Windows Media,. QuickTime, et cetera). Moreover, it should be recognized that the teachings of the present invention may be practiced in conjunction with other client/server protocols such as Session Initiation Protocol (SIP), H.323, etc.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A multimedia device (160) including a media player engine (250) operable to establish a streaming media session with a content source via a standard control channel (255) over a network (150) and to receive from the content source streaming digital multimedia content representative of a current media clip (130) within a playlist (140) during the streaming media session, wherein the multimedia device (160) is **characterized by**:
a media application (240) in communication with the content source via an external interface (245) over the network (150) and outside the standard control channel (255) between the media player engine (250) and the content source;
wherein the media application (240) is operable to generate a playlist navigation message (350) to the content source to navigate the playlist (140) and control the streaming digital multimedia content via the external interface (245).

2. The device of Claim 1, further comprising:
a proxy (600) operable to communicate with the media application (240) using a first protocol, communicate with the media player engine (250) using a second protocol and communicate with the content source using both the first protocol and the second protocol, wherein the external interface (245) is realized by the proxy (600).

3. The device of Claim 1, wherein the media application (240) is further operable to generate a request to the content source for the playlist (140) that identifies a plurality of media clips including the current media clip and to receive the playlist (140) from the content source via the external interface (245).

4. The device of Claim 1, further comprising:
a web browser (210) operable to receive a uniform resource locator (URL) including a session identifier (360) for the streaming media session and to provide the URL including the session identifier (360) to the media engine (250) for use in establishing the streaming media session with the content source, and wherein the media application (240) is further operable to extract the session identifier (360) from the URL and to generate the playlist navigation message (350) using the session identifier (360).

5. The device of Claim 4, wherein the playlist navigation message (350) includes the session identifier (360), a playlist identifier (370) of the playlist (140), a media clip identifier (380) for a selected media clip (130) and a timing parameter (395) indicating a time at which the content source switches from the current media clip to the selected media clip.

6. The device of Claim 1, wherein the playlist navigation message (350) includes a session identifier (360) identifying the streaming media session and a relative navigation request parameter (365) providing navigation information relative to the current media clip (130).

7. The device of Claim 1, wherein the standard control channel (255) is a real time streaming protocol (RTSP) control channel.

8. The device of Claim 1, wherein the external interface (245) is a hyper-text transfer protocol (HTTP) interface.

9. A multimedia system (100) including a streaming media server (110) providing access to media clips (130) and playlists (140) and a device (160) including a media player engine (250) operable to establish a streaming media session with the streaming media server (110) via a standard control channel (255) over a network (150) and to receive from the streaming media server (110) streaming digital multimedia content representative of a current one of the media clips (130) within a current one of the playlists (140) during the streaming media session, wherein the system (100) is **characterized by**:
the device (160) including a media application (240) in communication with the streaming media server (110) via an external interface (245) over the network (150) and outside the standard control channel (255) between the media player engine (250) and the streaming media server (110);
wherein the media application (240) is operable to generate a playlist navigation message (350) to the streaming media server (110) to navigate the playlist (140) and control the streaming digital multimedia content via the external interface (245).

10. The system of Claim 9, further comprising:
a conversion module operable to convert between a first protocol used by the media application (240) to generate the playlist navigation message (350) and a second protocol used by the streaming media server (110) to process the playlist navigation message (350).
